# EUROPÄISCHE PATENTSCHRIFT

(11) **EP 3 026 416 B1**
(45) Veröffentlichungstag und Bekanntmachung des Hinweises auf die Patenterteilung: **18.07.2018**
(21) Anmeldenummer: 15196831.0
(22) Anmeldetag: 27.11.2015
(51) Int. Cl.: B66F 7/06, B66F 7/28, G01M 17/007

(54) **PRÜFVORRICHTUNG FÜR EINE FUNKTIONSPRÜFUNG VON FAHRZEUGSYSTEMEN**
TESTING DEVICE FOR TESTING THE FUNCTIONALITY OF VEHICLE SYSTEMS
DISPOSITIF DE VERIFICATION FONCTIONNELLE DE SYSTEMES DE VEHICULE

(30) Priorität: 27.11.2014 DE 102014224240
(43) Veröffentlichungstag der Anmeldung: 01.06.2016
(73) Patentinhaber: MAHA Maschinenbau Haldenwang GmbH & Co. KG, 87490 Haldenwang (DE)
(72) Erfinder: SEIFERT, Alexander, 87437 Kempten (DE); WENDL, Stefan, 87487 Wiggensbach (DE)
(74) Vertreter: MERH-IP Matias Erny Reichl Hoffmann Patentanwälte PartG mbB

(56) Entgegenhaltungen:
- WO-A1-01/86245
- WO-A2-03/093781
- DE-A1- 3 901 342
- FR-A1- 2 546 151
- FR-A1- 2 653 109
- US-A1- 2012 131 994

## Beschreibung

Die vorliegende Erfindung betrifft eine Prüfvorrichtung für eine Funktionsprüfung von Fahrzeugsystemen. Dabei wird das Fahrzeug auf einem erfindungsgemäßen Prüfstand platziert und verschiedene Fahrzustände simuliert. Durch die Funktionsprüfung der Fahrzeugsysteme kann demnach die Funktion der Fahrzeugsysteme an einem Prüfstand überprüft werden, sodass aufwändige Testfahrten entfallen.

Bislang konnten fahrdynamische Funktionsprüfungen auf Prüfständen, wie beispielsweise auf einem Rollenprüfstand, lediglich eingeschränkt durchgeführt werden. Insbesondere Fahrassistenzsysteme wie das ESP (Electronic Stability Control) konnten auf einem Prüfstand nicht überprüft werden. Bisher wurden elektronische Sicherheitssysteme nur über den Status der Fehlerlampe oder das Auslesen des Fehlerspeichers getestet. Diese Prüfmethoden geben aber nur bedingt Auskunft über die tatsächliche Funktion der Sicherheitssysteme. Im Gegensatz dazu ermöglicht der erfindungsgemäße Prüfstand eine echte Wirkprüfung der Sicherheits- und Assistenzsysteme.

Die WO 01/86245 A1 betrifft einen Rüttelprüfstand mit vier Scheitelrollen und einer Hubeinrichtung und Kippeinrichtung zum Anheben und Kippen des zu prüfenden Fahrzeugs. Der Rollenprüfstand ist ein kombinierter ESP-Rüttelprüfstand, wobei über die Hubeinrichtung das Fahrzeug von den Scheitelrollen abhebbar ist. Über die Kippeinrichtung kann das Fahrzeug kippbar sein zur Aktivierung von Beschleunigungssensoren.

Die FR 2653109 A1 betrifft eine Hebebühne zum Anheben eines Kraftfahrzeugs zur Kontrolle des Spiels der Räder. An Hubelementen sind Hilfsplatten vorgesehen. Das Fahrzeug kann angehoben werden derart, dass die Räder frei sind, um das Spiel der Fahrzeugräder zu kontrollieren.

Die FR 2546151 A1 betrifft eine Scherenhebebühne mit zwei gegenüber angeordneten Scheren mit hydraulischer Betätigung. Es sind Steuerzylinder vorgesehen zum Anheben der Scheren.

Die WO 03093781 A betrifft eine Fahrzeugtestvorrichtung mit einem Träger, auf dem das Fahrzeug positionierbar ist. Kräfte und Momente werden auf dem Träger aufgebracht, um die statischen Eigenschaften des Fahrzeugs zu bestimmen.

Die DE 3901342 A1 betrifft eine Vorrichtung zum Überprüfen des Spiels der Radaufhängung eines Fahrzeugs. Es ist eine Stützvorrichtung vorgesehen, die eine Drehung des Fahrzeugrades um seine Achse bei stehendem Fahrzeug ermöglicht.

Die US 2012/131994 A betrifft eine Fahrzeugtestplattform zum Testen des ESP-Systems eines Fahrzeugs.

Eine Aufgabe ist es eine gattungsgemäße Prüfvorrichtung so auszubilden, dass eine einfache und effiziente Möglichkeit zur Funktionsprüfung von Fahrassistenzsystemen geschaffen wird. Diese Aufgabe wird durch die Merkmale des unabhängigen Patentanspruchs gelöst. Die abhängigen Ansprüche betreffen vorteilhafte Ausführungsformen der Erfindung.

Die erfindungsgemäße Prüfvorrichtung für Fahrzeugsysteme und insbesondere Fahrerassistenzsysteme kann eine vertikal verfahrbare Aufstandsfläche aufweisen welche mit zumindest einem Hubmittel in Wirkverbindung stehen kann. Das Fahrzeug kann dabei mit der Aufstandsfläche kontaktierbar sein. Zudem kann die Prüfvorrichtung eine mit einem Rad des Fahrzeugs in Verbindung bringbare, mitrotierbare Laufrolle aufweisen. Über eine Steuereinheit kann das Hubmittel angesteuert werden wobei das Hubmittel derart ansteuerbar sein kann, dass ein vorbestimmter Beschleunigungszustand und/oder Geschwindigkeitszustand des auf der Aufstandsfläche positionierten Fahrzeugs erzeugbar ist. Dadurch kann ein vorbestimmter Erfassungsbereich der Fahrzeugsensoren erreicht werden wodurch Sensorsignale des Fahrzeugs erzeugbar sind die zur Funktionsprüfung der Steuereinheit zugeführt werden können. Somit können die Fahrassistenzsysteme des Fahrzeugs auf einfache und zuverlässige Weise auf ihre Funktion überprüft werden ohne dass eine aufwändige Testfahrt nötig wäre. Zudem können verschiedenste Fahrassistenzsysteme getestet werden, da durch die erfindungsgemäße Ausgestaltung und Ansteuerung des Prüfstands ein realer Fahrzustand simuliert werden kann. Somit kann beispielsweise auch ein Schleudern oder Ausbrechendes Fahrzeugs simuliert werden. Insbesondere kann ein Erfassungsbereich der Beschleunigungssensoren des Fahrzeugs erreicht werden, sodass eine Querbeschleunigung und/oder Rotation des Fahrzeugs simuliert werden kann. Ein Prüfer kann das Fahrzeug direkt am erfindungsgemäßen Prüfstand wie auf der Straße fahren und testen, ob zum Beispiel das ABS, das ESP, die elektronische Differenzialsperre, das ACC, das Kurven- und Abbiegelicht und viele weitere Systeme fehlerfrei funktionieren.

Das Hubmittel kann ein Haupthubmittel umfassen welches mit vertikal verfahrbaren Fahrflächen in Verbindung stehen kann und wobei auf den Fahrflächen ein zusätzliches Zwischenhubmittel angeordnet sein kann welches mit der vertikal verfahrbaren Aufstandsfläche in Verbindung stehen kann. Diese Anordnung hat insbesondere den Vorteil, dass das Fahrzeug über das Zwischenhubmittel freigehoben werden kann und über die Haupthubmittel das Fahrzeug samt Zwischenhubmittel für die Fahrzeugprüfung angehoben werden kann. Die Räder des Fahrzeugs können zudem jeweils mit den Laufrollen kontaktiert und angetrieben werden, bzw. können sich die Laufrollen mit vom Fahrzeug angetriebenen Rädern auch frei mitdrehen, wobei die Laufrollen von der Steuereinheit angesteuert werden können um einen Fahrzustand gezielt zu simulieren. Durch gezielte Ansteuerung der Hubmittel, insbesondere des Haupthubmittels, kann dann ein vorbestimmter Beschleunigungszustand und/oder Geschwindigkeitszustand des auf der Aufstandsfläche positionierten Fahrzeugs erzeugt werden, sodass der Erfassungsbereich verschiedener Sensoren des Fahrzeugs erreicht werden kann. Insbesondere kann dadurch auch der Erfassungsbereich der Beschleunigungssensoren und Drehratensensoren erreicht werden.

Das Drehmoment, die Drehzahl und/oder der Kontaktdruck des mit der Laufrolle kontaktierten Rades kann über ein Erfassungsmittel erfassbar sein. Insbesondere können über Messvorrichtungen im Bereich der Laufrolle verschiedenste Messwerte wie beispielsweise die Raddrehzahl, das Drehmoment, die Bremskraft und/oder die Seitenkraft des kontaktierten Reifens erfasst werden. Dazu können in der Laufrolle und/oder im Bereich der Lagerung der Laufrolle Sensoren und insbesondere Drucksensoren oder Drehzahlsensoren vorgesehen sein. Durch die Erfassung dieser Werte ist eine umfangreiche Analyse und Prüfung des jeweiligen Radzustandes auf einfache Weise möglich. Zudem kann basierend auf diesen Werten die Prüfvorrichtung derart angesteuert werden, dass verschiedenste Fahrzustände möglichst realistisch dargestellt werden und somit auch die entsprechenden Systeme und/oder Sensoren des Fahrzeugs ausgelöst werden können.

Die erfindungsgemäße Prüfvorrichtung für Fahrzeugsysteme kann zumindest ein erstes Hubmittel welches mit einer ersten Aufstandsfläche in Wirkverbindung stehen kann und ein zweites Hubmittel welches mit einer zweiten Aufstandsfläche in Wirkverbindung stehen kann, aufweisen. Die erste Aufstandsfläche kann gegenüberliegend der zweiten Aufstandsfläche angeordnet sein und die Hubmittel können unabhängig voneinander angesteuert werden. Durch diese Ausgestaltung ist es möglich Fahrzeuge über zwei separate Aufstandsflächen und Hubmittel im Prüfstand zu positionieren und beispielsweise unterschiedliche Seiten des Fahrzeugs mit unterschiedlichen Bewegungen zu beaufschlagen um eine Reaktion der jeweiligen Sensoren des Fahrzeugs zu bewirken. Insbesondere umfasst diese Ausgestaltung Prüfstände mit zwei Aufstandsflächen zum Anheben eines zu prüfenden Fahrzeugs wobei an der rechten und linken Seite des Fahrzeugs jeweils eine Aufstandsfläche mit dem Fahrzeug kontaktiert werden kann um das Fahrzeug anzuheben.

Die Laufrolle kann einen eigenen Antrieb umfassen und/oder zumindest zwei Räder des Fahrzeugs können mit einer eigenen Laufrolle kontaktiert und angetrieben werden. Durch die Implementierung eines Antriebs in die Laufrolle können beispielsweise Räder welche nicht über die Achse des Fahrzeugs angetrieben werden, über die Laufrolle angetrieben werden, sodass ein Fahrzustand des Fahrzeugs simuliert werden kann. Bei Fahrzeugen mit ausschließlich angetriebenen Rädern, beispielsweise mit Allradantrieb, können die Laufrollen frei mit den Rädern mitlaufend eingestellt werden. Daher können Fahrzeuge unabhängig von der Anzahl der angetriebenen Räder im Prüfstand geprüft und ein Fahrzustand simuliert werden.

Die Laufrollen können derart mit den Rädern des über die Zwischenhubmittel freigehobenen Fahrzeugs in Wirkverbindung stehen, dass ein Fahrzustand simulierbar ist und dadurch die Fahrzeugsysteme im Fahrzustand angeregt werden können. Durch die Kontaktierung der Laufrollen mit den Rädern des Fahrzeugs ist es möglich eine Fahrbahn zu simulieren und beispielsweise ein Durchdrehen der Räder zu simulieren.

Die Aufstandsflächen können asynchron oder gleichzeitig und gegenläufig über die Hubmittel anhebbar, absenkbar und/oder in der Ebene drehbar ausgestaltet sein. Dadurch ist es möglich, dass das Fahrzeug welches auf den Aufstandsflächen platziert ist in verschiedene Beschleunigungs- und/oder Geschwindigkeitszustände versetzt wird, sodass die jeweiligen Sensoren und Assistenzsysteme des Fahrzeugs angeregt werden können. Durch die asynchrone Ansteuerung und die gegenläufige Ansteuerung der Hubmittel werden insbesondere Kippbewegungen oder Rotationsbewegungen des Fahrzeugs erzeugt, sodass ein Wanken, Nicken und/oder Schieben des Fahrzeugs simulierbar ist. Somit wird insbesondere durch die gezielte unterschiedliche Ansteuerung der Hubmittel ein Bewegungszustand des Fahrzeugs bewirkt.

Die Beschleunigung kann dabei eine Querbeschleunigung und/oder Längsbeschleunigung des Fahrzeugs sein und die Geschwindigkeit kann eine Gierrate, Nickgeschwindigkeit, und/oder Wankgeschwindigkeit des Fahrzeugs sein, wobei durch die zusätzliche Bewegung der Hubmittel die Sicherheitssysteme des Fahrzeugs ausgelöst werden können. Somit können durch die Bewegung der Hubmittel und durch den Einsatz der Laufrollen die verschiedensten Beschleunigungs- und Geschwindigkeitszustände des Fahrzeugs simuliert werden um dadurch die Sicherheitssysteme auszulösen und diese in weiterer Folge zu überprüfen.

Jedes Hubmittel kann zumindest einen hydraulischen und/oder pneumatischen Hubzylinder umfassen. Insbesondere mit hydraulischen oder pneumatischen Hubzylindern lassen sich besonders hohe Beschleunigungen der Aufstandsflächen bzw. des Fahrzeugs erzeugen da diese Hubmittel impulsartig ansteuerbar sind und auch sich auch impulsartig bewegen können. Die Hubmittel können zudem derart über die Steuereinheit ansteuerbar sein, dass die Aufstandsflächen sich impulsartig bewegen. Die impulsartige Ansteuerung und Bewegung der Hubmittel ermöglicht die Erzeugung von hohen Beschleunigungen des Fahrzeugs wobei gleichzeitig nur ein geringer Verfahrensweg der Aufstandsflächen dazu benötigt wird. Somit können durch die erfindungsgemäße Ausgestaltung verschiedenste Beschleunigungssensoren erregt werden wobei gleichzeitig die Hubwege der Hubmittel gering gehalten werden können um so auch eine einfache, platzsparende und vor allem sichere Fahrzeugprüfung zu gewährleisten.

Die Zwischenhubmittel können als Radfreiheber einsetzbar sein und/oder Scherenhubelemente umfassen. Durch die Ausgestaltung der Zwischenhubmittel als Radfreiheber ist es möglich das Fahrzeug zunächst von den Fahrflächen frei zu heben um die Räder des Fahrzeugs für die Fahrzeugüberprüfung danach mit den Laufrollen zu kontaktieren. Somit kann das Fahrzeug stabil und sicher über die Aufstandsflächen und die Zwischenhubmittel angehoben werden und bei der dynamischen Fahrassistenzprüfung kann dann bspw. über die Ansteuerung der Haupthubmittel das gesamte Fahrzeug samt Zwischenhubmittel stabil und sicher in verschiedene Beschleunigungszustände versetzt werden. Der Einsatz von Scherenhubelemente gewährleistet zudem eine günstige und effektive Übertragung der Hubkräfte auf die Aufstandsflächen bzw. auf das Fahrzeug um dieses anzuheben und in die verschiedenen Beschleunigungszustände zu versetzen.

Die angetriebene Laufrolle kann im Wesentlichen schlupffrei zum Rad des Fahrzeugs angetrieben werden und über eine Drehmomentenerfassung und/oder Geschwindigkeitserfassung und/oder Erfassung der Druckdifferenz insbesondere des Anpressdrucks der Laufrollen kann ein Bremseingriff des Fahrassistenzsystems ermittelbar sein. Die Laufrolle kann mit hoher Präzision angesteuert werden um den Schlupf zwischen Rad und Laufrolle zu minimieren und dadurch die Messungsgenauigkeit verschiedenster Parameter wie beispielsweise der Drehzahl über die Laufrolle zu erhöhen. Das Drehmoment kann zudem über einen in der Laufrolle vorgesehenen elektrisch-angetriebenen Motor oder Generator gemessen werden. Gleichzeitig kann über eine solche Elektromaschine auch im Bedarfsfall die Laufrolle selbst angetrieben werden um beispielsweise die nicht-angetriebenen Räder des Fahrzeugs nachzuführen und somit eine Bewegung des Fahrzeugs auf einer Straße zu simulieren. Zudem kann vorteilhaft die Druckdifferenz und/oder der Druck erfasst werden welcher auf die Laufrolle ausgeübt wird um dadurch bspw. einen Bremseingriff am jeweiligen Rad des Fahrzeugs zu erfassen. Zudem kann die Druckdifferenz in einer weiteren vorteilhaften Ausgestaltung derart genau ermittelt werden, dass Lenkbewegungen des Reifens ermittelt werden können. In Kombination mit der einstellbaren Laufrolle welche über eine Verstelleinrichtung verstellbar gegenüber dem Reifen des Fahrzeugs angeordnet ist ergeben sich somit eine große Vielzahl von verschiedenen Ansteuerungs- und Simulationsmöglichkeiten.

Die erfindungsgemäße Prüfvorrichtung für Fahrzeugsysteme kann zudem eine Fahrzeugschnittstelle aufweisen, wobei Systemwerte der Fahrzeugsysteme und insbesondere die Beschleunigungs- und Geschwindigkeitswerte der Fahrzeugsensoren über diese Schnittstelle auslesbar sein können und/oder über eine Anzeigeeinheit darstellbar und/oder mit vorbestimmten Sollwerten vergleichbar sein können. Durch die Schnittstelle lassen sich somit die erzeugten und ermittelten Parameter und Werte der Fahrzeugsysteme und Sensoren auslesen und weiterverarbeiten. Insbesondere ist es auch möglich die Prüfvorrichtung über diese Werte und Parameter anzusteuern um dadurch bspw. einen Regelkreis zu erzeugen und das Fahrzeug in verschiedenster Weise anzuregen. Somit können Schwingung und insbesondere Eigenschwingungen der Fahrzeugsysteme oder des gesamten Fahrzeugs auf einfache Weise ermittelt werden. Zudem können die ausgelesenen Systemwerte des Fahrzeugs auch verwendet werden um den Fahrzustand des Fahrzeugs in einer virtuellen Umgebung zu simulieren in Abhängigkeit der tatsächlichen Werte des Fahrzeugs. Einerseits kann dadurch das virtuelle Modell des Fahrzeugs realistischer dargestellt werden und insbesondere das Fahrverhalten wird realistischer dargestellt, aber dadurch ist es auch möglich ein virtuelles Modell des Fahrzeugs zu verbessern und realistischer abzubilden. Somit kann durch die vorliegende Prüfvorrichtung für jedes Auto ein individuelles virtuelles Modell mit realistischen Fahreigenschaften nachgebildet werden. Natürlich können die erfassten Werte über die Schnittstelle auch verschiedenster Software wie Analysesoftware zugeführt werden.

Auf der Aufstandsfläche kann eine antreibbare oder in zwei Achsrichtungen gleitend gelagerte Schiebeplatte vorgesehen sein, die sich in Längsrichtung und/oder Querrichtung und/oder in Kreisbahnen und/oder auf einer Bahn mit sich veränderndem Radius bewegen kann. Durch diese Ausgestaltung ist es möglich auch Beschleunigungen und Geschwindigkeiten entlang der Querachse des Fahrzeugs zu simulieren. Dadurch kann insbesondere ein Schieben des Fahrzeugs simuliert bzw. erzeugt werden. Zudem kann durch unterschiedliche Ansteuerung der verschiedenen Schiebeplatten ein Gieren des Fahrzeugs um die Hochachse bewirkt werden, sodass eine Gierrate/-Beschleunigung erzeugt werden kann.

Eine Bewegung des am Prüfstand platzierten Fahrzeugs in Querrichtung kann in einfacher Weise auch über die Verwendung von Achsspieltestern erzeugt werden. Die Prüfvorrichtung kann dabei einen Linearaktuator zur Achsspielprüfung aufweisen, der als Querverbindung zwischen den Aufstandsflächen, Fahrschienen oder Tragelementen ausgebildet ist und mit diesen endseitig in Verbindung steht zum Aufbringen einer Querkraftkomponente auf die Fahrzeugräder einer Fahrzeugsachse über das Trageelement durch die Bewegung des Linearaktuators in Querrichtung des Fahrzeugs. Der der Linearaktuator kann in einem Endbereich der Fahrschienen, der insbesondere um höchstens ein Drittel der Fahrschienenlänge von einem Schienenende entfernt ist, mit diesen in Verbindung stehen. Das Hubelement kann einen Hubzylinder pro Fahrschiene mit je einer mit den Fahrschienen in einer Wirkverbindung stehenden Kolbenstange aufweisen, und die Fahrschienen können bei Bewegung des Linearaktuators eine Schwenkbewegung in einer horizontalen Ebene ausführen. Dadurch kann einerseits das Achsspiel des Fahrzeugs getestet werden und andererseits können auch Querbeschleunigungen oder Rotationsbewegungen für die dynamische Fahrzeugprüfung des Fahrzeugs bewirkt werden.

Die Aufstandsfläche und/oder Fahrfläche kann derart horizontal verschieblich ausgestaltet sein, dass das auf der Aufstandsfläche positionierte Fahrzeug in eine Querbewegung und/oder Rotationsbewegung versetzt werden kann. Dadurch ist es möglich das Fahrzeug direkt auf der Aufstandsfläche zu platzieren und über die Beweglichkeit der Aufstandsfläche in horizontaler Richtung, welche auch für die Bewegung in horizontaler Ebene antreibbar ausgestaltet sein kann, zu bewegen.

Ein Verfahren zur Funktionsprüfung von Fahrzeugsystemen, insbesondere Fahrerassistenzsystemen, an einem Prüfstand mit zumindest einer vertikal verfahrbaren Aufstandsfläche welche mit zumindest einem Hubmittel in Wirkverbindung stehen kann, einer mit einem Rad des Fahrzeugs in Verbindung bringbaren, mitrotierbaren Laufrolle und einer Steuereinheit zur Ansteuerung des Hubmittels. Die Steuereinheit kann dabei die folgenden Schritte veranlassten, Anheben des Fahrzeugs durch das Hubmittel, Kontaktierung der Laufrolle mit einem Rad des Fahrzeugs insbesondere zur Übertragung und/oder Erfassung eines Drehmoments und/oder einer Geschwindigkeit des Rades, Ansteuerung des Hubmittels zur Erzeugung einer Beschleunigung und/oder Geschwindigkeit des Fahrzeugs derart, dass ein vorbestimmter Erfassungsbereich der Fahrzeugsensoren erreichbar sein kann wodurch Sensorsignale des Fahrzeugs erzeugbar sein können die zur Funktionsprüfung der Steuereinheit zugeführt werden können. Somit können die Fahrassistenzsysteme des Fahrzeugs auf einfache und zuverlässige Weise auf ihre Funktion überprüft werden ohne dass eine aufwändige Testfahrt nötig wäre. Zudem können verschiedenste Fahrassistenzsysteme getestet werden, da durch die erfindungsgemäße Ausgestaltung und Ansteuerung des Prüfstands ein realer Fahrzustand simuliert werden kann.

Das Verfahren kann zudem mit einem ersten Hubmittel und einem zweiten Hubmittel durchgeführt werden, wobei die Hubmittel unabhängig voneinander ansteuerbar sein können und die Hubmittel asynchron oder gleichzeitig und gegenläufig angesteuert werden können. Durch die asynchrone Ansteuerung und die gegenläufige Ansteuerung der Hubmittel werden insbesondere Kippbewegungen oder Rotationsbewegungen des Fahrzeugs erzeugt, sodass ein Wanken, Nicken und/oder Schieben des Fahrzeugs simulierbar ist. Somit wird insbesondere durch die gezielte unterschiedliche Ansteuerung der Hubmittel ein Bewegungszustand des Fahrzeugs bewirkt.

Die Ansteuerung des Hubmittels kann ein impulsartiges Anheben, Absenken und/oder Drehen der Aufstandsflächen bewirken. Die impulsartige Ansteuerung bzw. Bewegung der Hubmittel ermöglicht die Erzeugung von hohen Beschleunigungen des Fahrzeugs wobei gleichzeitig nur ein geringer Verfahrensweg der Aufstandsflächen dazu benötigt wird. Somit können durch die erfindungsgemäße Ausgestaltung verschiedenste Beschleunigungssensoren erregt werden, wobei gleichzeitig die Hubwege der Hubmittel gering gehalten werden können um so auch eine einfache, platzsparende und vor allem sichere Fahrzeugprüfung zu gewährleisten.

Die Laufrolle kann mit einem Antrieb ausgestaltet sein und das Rad des Fahrzeugs kann über die Laufrolle angetrieben werden. Dadurch kann das Rad welches mit der Laufrolle in Kontakt gebracht wird angetrieben werden, wenn es sich um ein Rad handelt welches nicht über das Fahrzeug direkt angetrieben wird. Das nicht vom Fahrzeug angetriebene Rad kann daher den vom Fahrzeug angetriebenen Rädern nachgeführt werden, sodass bei entsprechender Ansteuerung ein Fahrzustand des Fahrzeugs simulierbar ist und den jeweiligen Sensoren insbesondere den Sensoren der jeweiligen Räder eine Bewegung des Fahrzeugs entlang einer Straße simuliert werden kann. Auch sind verschiedene Zustände mit verschiedenen Schiebewinkeln darstellbar.

Das Hubmittel kann ein Haupthubmittel umfassen welches mit vertikal verfahrbaren Fahrflächen in Verbindung stehen kann. Auf den Fahrflächen kann ein zusätzliches Zwischenhubmittel angeordnet sein welches mit der vertikal verfahrbaren Aufstandsfläche in Verbindung stehen kann. Das Verfahren kann den Schritt aufweisen, Ansteuern des Haupthubmittels derart, dass ein impulsartiges Anheben, Absenken und/oder Drehen der Aufstandsflächen bewirkt werden kann.

Die Laufrollen können über einstellbare Rollenhalterungen relativ zum Rad des Fahrzeugs bewegt werden. Insbesondere kann dadurch ein vorbestimmter Anpressdruck zwischen der Laufrolle und dem Rad des Fahrzeugs erreicht werden. Die Laufrollen können über die einstellbaren Rollenhalterungen zudem dynamisch angesteuert werden, sodass verschiedene Haftungszustände zwischen Rad und Laufrolle darstellbar sind. Insbesondere kann dadurch ein Haftungsverlust zwischen dem Rad und der Laufrolle bewirkt werden wobei dieser Haftungsverlust zu einem Durchdrehen des Rades des Fahrzeugs führen könnte, sodass dadurch verschiedene Fahrzeugassistenzsysteme aktiviert werden können. Durch periodisches anheben und absenken der Laufrolle kann zudem eine Fahrt auf einer holprigen Straße simuliert werden. Durch die Einstellbarkeit der Laufrolle lässt sich somit eine Vielzahl verschiedenster Fahrzustände simulieren, ohne dass dafür eine Testfahrt nötig wäre. In Zusammenwirkung mit der Ansteuerung der Hubmittel können somit sämtliche Sensoren wie Beschleunigungsensoren aktivierte bzw. angeregt werden um die Fahrassistenzsysteme zu aktivieren und zu überprüfen.

Der Prüfstand kann zudem eine Vorrichtung zur Anregung der visuellen oder optischen Sensoren des Fahrzeugs umfassen, sodass weitere Fahrassistenzsysteme wie beispielsweise der Spurhalteassistent geprüft werden kann. Durch die Vorrichtung zur Anregung der visuellen oder optischen Sensoren können somit insbesondere Fahrstreifen einer Fahrbahn simuliert werden.

Vorteilhafte Ausgestaltungen und weitere Details der vorliegenden Erfindung werden im Folgenden, anhand verschiedener Ausführungsbeispiele mit Bezug auf schematische Figuren, beschrieben.

**In den schematischen Zeichnungen ist die Erfindung näher erläutert.**
- **Figur 1:**: zeigt eine Seitenansicht der erfindungsgemäßen Prüfvorrichtung
- **Figur 2:**: zeigt eine Seitenansicht eines Fahrzeugs in einem Ausführungsbeispiel der vorliegenden Erfindung
- **Figur 3:**: zeigt eine weitere Ansicht der erfindungsgemäßen Prüfvorrichtung

### Detaillierte Beschreibung von Ausführungsbeispielen

Fahrassistenzsysteme werden vermehrt in verschiedensten Fahrzeugen eingesetzt und können einen großen Beitrag zur Erhöhung der Fahrsicherheit liefern. Zunehmend entsteht somit der Bedarf diese Assistenzsysteme auf ihre Funktion hin zu überprüfen. Die vorliegende Erfindung ermöglicht eine einfache und zuverlässige Art der Überprüfung solcher Systeme. Die bei der Fahrzeugüberwachung notwendige Prüffahrt lässt sich mit der vorliegenden Erfindung zeitsparend erledigen, ohne das Fahrzeug für die anschließende Durchsicht nochmals bewegen zu müssen. Das schont in staubelasteten Ballungsräumen die Umwelt und verkürzt den Prüfvorgang.

Der erfindungsgemäße Prüfstand erlaubt dabei eine Testfahrt und die Wirkprüfung von Sicherheits- und Fahrassistenzsystemen auf einem Prüfstand. Damit sorgt er für einen effizienten Prüfablauf und mehr Sicherheit im Straßenverkehr. Der erfindungsgemäße Prüfstand ist dabei bevorzugt mit einer Doppel-Scherenhebebühne ausgestattet. Er besteht aus Rollensätzen (Laufrollen 6), die bevorzugt hydraulisch an das angehobene Fahrzeug angelegt werden, einer Steuerung, die auch in den Steuerschrank der Hebebühne integriert werden kann und einer Anzeigeeinheit. Für die Prüffahrt wird das Fahrzeug auf die Hebebühne gefahren und mit Hilfe des Radfreihebers (Zwischenhubmittel 2A) so weit angehoben, bis alle Räder frei stehen. Mit dieser Maßnahme ist das Fahrzeug ohne weiteren Zusatzaufwand sicher auf dem Prüfstand fixiert. Anschließend legt das hydraulische System per Knopfdruck die Prüfrollen innerhalb weniger Sekunden an die Räder an. Danach kann die Prüffahrt mit einem Tempo von bspw. 80 km/h beginnen. Der Prüfablauf kann dabei vollständig automatisiert sein. Während der Testfahrt kann zudem auch das Lenkrad eingeschlagen werden, um Kurvenfahrten zu simulieren.

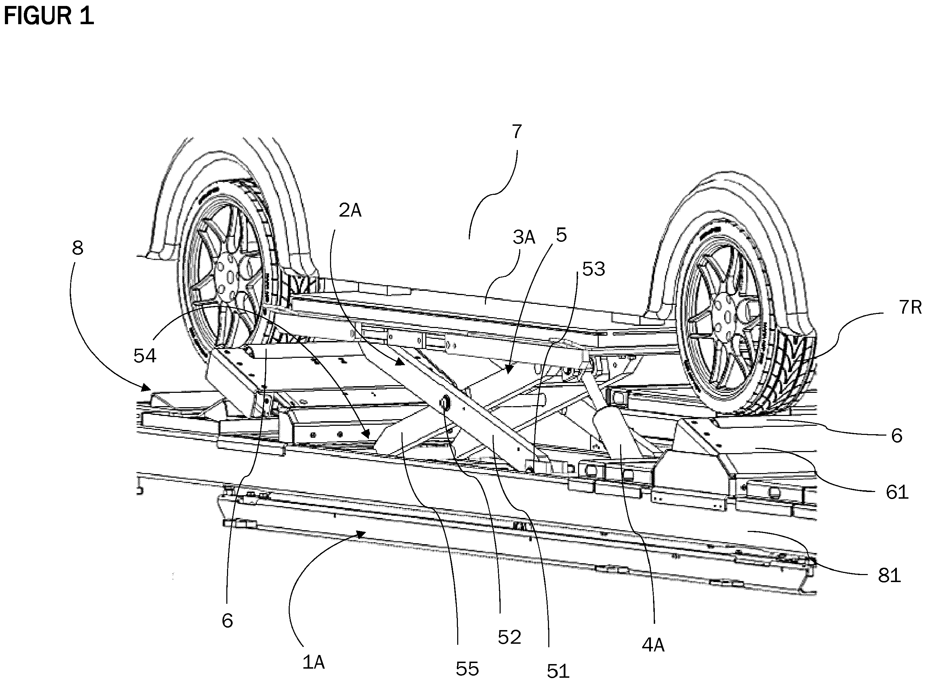

In Figur 1 ist eine Seitenansicht einer erfindungsgemäßen Prüfvorrichtung dargestellt. Dabei ist ein Fahrzeug 7 auf einer ersten Aufstandsfläche 3A und einer nicht dargestellten zweiten Aufstandsfläche platziert. Über den Reifenfreiheber, bzw. das Zwischenhubmittel 2A wird das Fahrzeug 7 soweit angehoben, bis die Räder freigehoben sind. Das Fahrzeug 7 kann entweder direkt mit der Aufstandsfläche 3A kontaktiert sein oder es können auch Kontaktblöcke vorgesehen sein welche zwischen dem Fahrzeug und der Auflagefläche platziert werden. Je nach Anwendungsfall lässt sich somit die absolute Hubhöhe anpassen. Zudem ist es möglich, dass die Aufstandsfläche in ihrer Länge veränderbar ausgestaltet ist, sodass durch das Ausfahren oder Einfahren der verschiebbaren Elemente der Aufstandsfläche 3A Fahrzeuge mit verschiedenem Radstand problemlos freigehoben werden. Für kleine Fahrzeuge mit kleinerem Radstand können die Verschiebeelemente der Aufstandsfläche 3A eingefahren werden, sodass die Aufstandsfläche 3A nicht in Kontakt mit den Reifen des Fahrzeugs kommt. Für größere Fahrzeuge können die Verschiebeelemente der Aufstandsfläche ausgefahren werden, sodass die Kontaktpunkte des Fahrzeugs über welche das Fahrzeug angehoben werden kann erreicht werden können.

Der Radfreiheber (Zwischenhubmittel 2A) ist im Beispiel in Figur 1 mit Scherenhubelementen 5 ausgestaltet. Dabei sind verschiedene Träger 51, 55 scherenartig zueinander angeordnet wobei die Träger 51, 55 über einen Bolzen 52 in Wirkverbindung stehen. Durch einen Hubzylinder 4A welcher bevorzugt als hydraulischer oder pneumatischer Hubzylinder ausgestaltet ist wird die Aufstandsfläche 3A höhenverstellt. Dabei bewegen sich die Träger scherenartig zueinander und nehmen zusammen mit dem Hubzylinder, die Gewichtskraft des Fahrzeugs auf. Zwei Träger werden über die Befestigung 53 im Bereich der Fahrfläche fixiert, wobei zwei gegenüberliegende Träger über eine Lagerschiene 54 gelagert sind. Diese verschiebbaren Träger 55 bewegen sich mit dem Hubzylinder 4A mit, sodass sich bei einem Ausfahren des Hubzylinders 4A die Enden der verschiebbaren und fixierten Träger zueinander bewegen. Die unteren Enden der verschiebbaren Träger 55 welche in der Lagerschiene 54 eingebracht ist bewegen sich beim Ausfahren des Hubzylinders 4A in Richtung der unteren Enden der Träger 51 welche in der Befestigung 53 fixiert sind. Die unteren Enden der Träger 51 sind dabei bevorzugt über eine Bolzenverbindung im Bereich der Fahrfläche 8 bei der Befestigung 53 fixiert. Die Lagerschiene 54 weist bevorzugt auch Haken bzw. Rasten auf über welche das entlang der Lagerschiene 54 verschiebbare Ende der verschiebbaren Träger 55 in verschiedenen Positionen fixierbar ist.

Die Laufrolle 6 wird bevorzugt über eine einstellbare Rollenhalterung 61 im Bereich der Fahrfläche 8 angebracht. Über die einstellbare Rollenhalterung 61 kann die Laufrolle 6 relativ zum Rad 7R des Fahrzeugs 7 bewegt werden. Dadurch kann die Laufrolle 7 mit dem Rad 7R des Fahrzeugs 7 in Kontakt gebracht werden. Die Laufrolle kann zudem einen eigenen Antrieb aufweisen über welchen bei Bedarf das Rad 7R des Fahrzeugs 7 angetrieben werden kann. Die Laufrolle 6 kann verschiedene Sensoren umfassen. Über Drucksensoren kann der Anpressdruck der Laufrolle 6 relativ zum Rad 7R des freigehobenen Fahrzeugs 7 ermittelt werden. Zudem kann über eingebaute Sensoren das Drehmoment des Rads gemessen werden. Bevorzugt weißt die Laufrolle 6 zudem Sensoren auf, welche die Kräfte quer zur Laufrichtung des Rads 7R messen. Dies kann bspw. über Sensoren an den axialen Stirnseiten der Laufrolle 6 vorgesehen werden.

Die einstellbare Rollenhalterung 61 sowie das Zwischenhubmittel 2A sind als Teil der Fahrfläche 8 ausgebildet. Im eingefahrenen Zustand des Hubmittels 2A bildet die Fahrfläche 8 somit eine Fläche über welche das Fahrzeug 7 hinweg fahren kann, sodass für die dynamische Fahrzeugprüfung das Fahrzeug eigenständig auf die Fahrfläche 8 bewegt werden kann um anschließend über die Radfreiheber freigehoben zu werden. Die Fahrfläche 8 weist als Strukturbauteil zudem einen Rahmen 81 auf welcher die einstellbare Rollenhalterung 61 und das Zwischenhubmittel aufnimmt. Der Rahmen 81 ist an seiner Unterseite mit einem Haupthubmittel 1A verbunden. Über das Haupthubmittel 1A kann somit der gesamte Aufbau samt Fahrzeug bewegt werden. Bevorzugt wird der gesamte Aufbau vertikal nach oben oder unten bewegt. In einer Weiterbildung der Prüfvorrichtung sind über antreibbare Aufnahmeplatten im Bereich der Fahrfläche 8 auch Querbewegungen des gesamten Aufbaus oder der gesamten Hebebühne möglich.

Die Prüfvorrichtung ist derart ausgestaltet, dass eine dynamische Fahrassistenzprüfung durchgeführt werden kann. Dafür ist eine spezielle Steuervorrichtung vorgesehen über welche die Hubmittel und die verschiedenen Laufrollen des Prüfvorrichtung angesteuert werden können. Zudem können die Hubmittel und insbesondere das Haupthubmittel 1A und das Zwischenhubmittel 2A derart ausgestaltet sein, dass diese auch Querkräfte aufnehmen können welche seitlich auf die Hubmittel wirken. Dazu können bspw. die Träger 51 und die Träger des Haupthubmittels und/oder die Befestigung 53 mit Versteifungselementen ausgeführt sein welche insbesondere dazu geeignet sind die maximal zulässigen Querkräfte der Hubmittel zu erhöhen. Insbesondere bei der dynamischen Fahrzeugprüfung können somit erhöhte Querkräfte aufgenommen werden welche nötig sein können um verschiedene Beschleunigungssensoren des Fahrzeugs anzuregen.

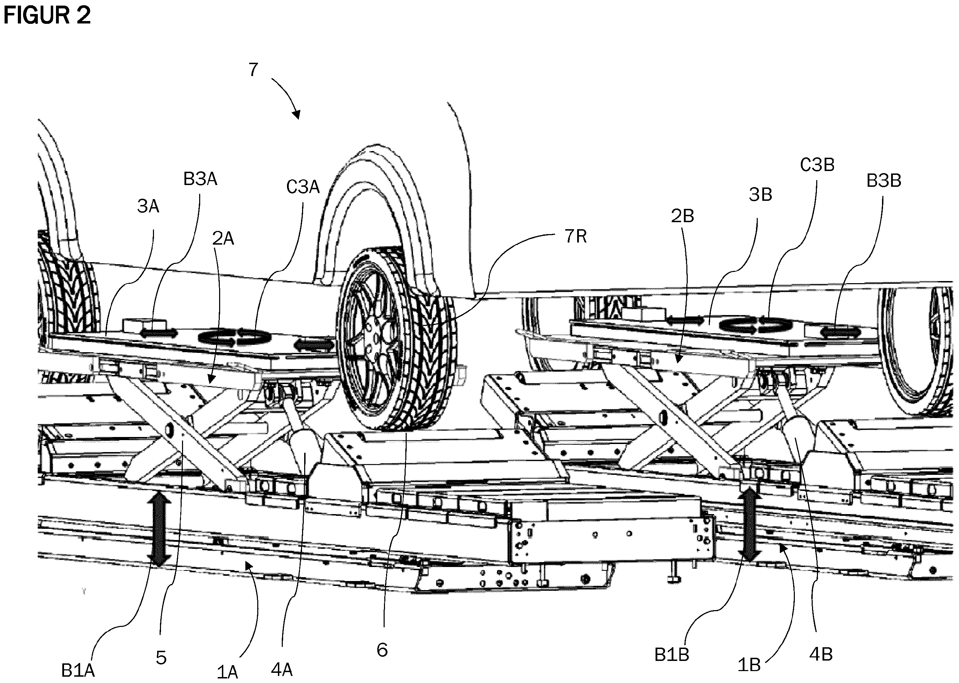

In einer vorteilhaften Ausgestaltungsform der vorliegenden Erfindung sind zwei Vorrichtungen wie in Figur 1 beschrieben nebeneinander angeordnet. Diese Anordnung ist in Figur 2 dargestellt. Das Fahrzeug 7 wird dabei über die erste und zweite Aufstandsfläche 3A und 3B freigehoben. Die erste Aufstandsfläche 2A ist dabei gegenüberliegend von der zweiten Aufstandsfläche 3B angeordnet. Für die dynamische Fahrzeugprüfung wird das Fahrzeug in verschiedene Beschleunigungszustände versetzt. Grundsätzlich wird dabei zunächst über die kontaktierten Laurollen 6 welche an die Räder 7R des Fahrzeugs herangefahren werden ein Fahrzustand des Fahrzeugs auf einer Straße simuliert. Die Laurollen 6 können je nach Bedarf dabei die Räder 7R des Fahrzeugs antreiben (zur Mitführung von Rädern einer vom Fahrzeug nicht angetriebenen Fahrzeugachse) oder selbst von den Rädern 7R angetrieben werden.

Zur Erzeugung einer Querkraft bzw. einer Querbeschleunigung im Fahrzeug 7, können die Haupthubmittel 1A und 1B angesteuert werden. Diese sind dabei derart ausgestaltet, dass eine impulsartige Bewegung der Haupthubmittel 1A und 1B möglich ist. Durch entsprechend hohe Drücke welche für die Ansteuerung der Hebezylinder der Haupthubmittel 1A und 1B verwendet werden kann somit eine impulsartige Bewegung des Fahrzeugs erreicht werden. Die Steuereinheit kann dabei bevorzugt das erste und das zweite Haupthubmittel entgegengesetzt ansteuern, sodass das erste Haupthubmittel 1A eine im Wesentlichen vertikal nach unten gerichtete Bewegung der kontaktierten Fahrzeugseite bewirkt und das zweite Haupthubmittel 1B eine im Wesentlichen vertikal nach oben gerichtete Bewegung der kontaktierten Fahrzeugseite bewirkt oder umgekehrt. Somit vollführt das Fahrzeug dadurch eine Wankbewegung. Durch diese Wankbewegung können verschiedene Fahrzeugsensoren angeregt werden. Die Steuereinheit kann jedoch auch derart angesteuert werden, dass nur das erste oder nur das zweite Haupthubmittel 1A, 1B angesteuert wird oder beide in dieselbe Richtung, je nach Anwendungsfall bzw. zu prüfenden Sensoren oder Fahrassistenzsystemen.

Durch die impulsartige Bewegung der Haupthubmittel 1A und/oder 1B welche über die Steuereinheit ausgelöst wird werden somit derart hohe Beschleunigungen ausgelöst, dass die Sensoren und Erfassungssysteme des Fahrzeugs ausgelöst werden können. Der Vorteil dieser impulsartigen Bewegung ist auch darin zu sehen, dass zur Erzielung der hohen Beschleunigungen lediglich ein kurzer Bewegungsweg von bspw. nur 1 bis 10 cm nötig ist um die gewünschten Beschleunigungen zu erzielen. Das Fahrzeug welches über die Aufstandsflächen 3A und 3B freigehoben wurde bleibt somit stabil auf dem Prüfstand. Zudem ist es in einer weiteren Ausgestaltungsform möglich das Fahrzeug über Aufnahmen welche auf den Aufstandsflächen aufgebracht sind zu kontaktieren. Die impulsartige Bewegungsrichtung der Haupthubmittel 1A und 1B ist in Figur 2 symbolisch mit einem Bewegungspfeil B1A und B1B dargestellt, welcher nach oben und unten jeweils eine Pfeilspitze aufweist. Alternativ besteht in einer weiteren Ausführungsform auch die Möglichkeit die Zwischenhubmittel 2A und 2B anstatt oder zusätzlich zu den Haupthubmitteln 1A und 1B erfindungsgemäß anzusteuern.

Zur Anregung der Fahrassistenzsysteme des Fahrzeugs können zudem auch gleichzeitig mit der Ansteuerung der Hubmittel die Laufrollen 6 angesteuert werden. Die Laufrollen 6 können dadurch bspw. ein Rutschen eines oder mehrerer Räder 7R simulieren. Dies kann insbesondere durch Ansteuerung der einstellbaren Rollenhalterung 61 erfolgen und zu einer Reduktion des Kontaktdrucks zwischen dem Rad 7R und der Laufrolle 6 führen. Zusätzlich oder alternativ kann auch die Laufrolle 6 selbst über einen integrierten Motor angetrieben werden sodass ein Haftungsverlust zwischen Rad und Laufrolle 6 bewirkt werden kann. In Zusammenwirkung mit den Hubmitteln können somit Fahrassistenzsysteme wie bspw. das ESP eines Fahrzeugs überprüft werden.

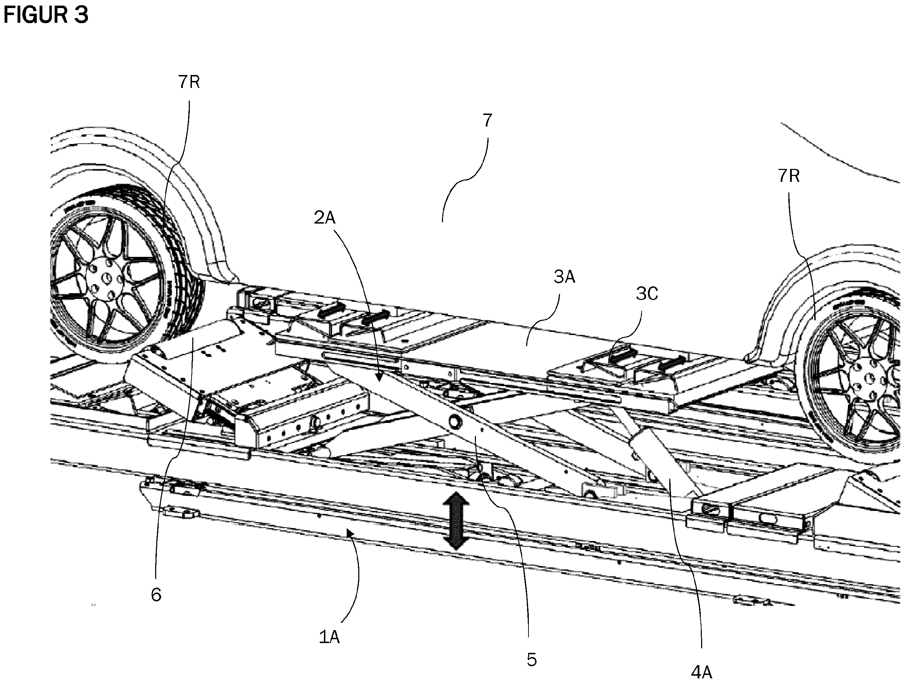

Zusätzlich zu der aus der impulsartigen vertikalen Bewegung des freigehobenen Fahrzeugs 7 ist es in einer weiteren Ausführungsform möglich über eine Rotationsbewegung der Aufstandsflächen oder Zwischenplatten das Fahrzeug in eine Gierbewegung zu versetzen. Zudem kann auch eine Querbewegung simuliert werden. In Figur 2 sind die Bewegungspfeile der Rotationsbewegung C3A und C3B dargestellt. Zusätzlich sind die Bewegungspfeile der Querbewegung B3A und B3B dargestellt. In diese Richtungen können impulsartige Bewegungen des Fahrzeugs über die Ansteuerung der Aufstandsflächen oder vorgesehener Zwischenplatten bewirkt werden. Somit können weitere Bewegungszustände des Fahrzeugs simuliert werden und weitere Sensoren des Fahrzeugs angeregt werden. Die Querbewegung des Fahrzeugs lässt sich zudem über verschiebbare Profilplatten 3C bewirken, welche schematisch in Figur 3 dargestellt sind. Die verschiebbaren Profilplatten 3C können somit das Fahrzeug 7 in die Richtung quer zur Fahrzeugausrichtung bewegen und verschiedene Bewegungszustände erzeugen. Die verschiebbaren Profilplatten können dabei jeweils einen Linearmotor und/oder pneumatische oder hydraulische Zylinder aufweisen, welche das Fahrzeug impulsartig bewegen können.

Somit können mit der erfindungsgemäßen Prüfvorrichtung sämtliche Bewegungszustände des Fahrzeugs realitätsnah simuliert werden. Fahrassistenzsysteme wie bspw. das Antiblockiersystem (ABS), die Antriebsschlupfregelung (ASR), die Berganfahrhilfe, Bergabfahrhilfe, die elektronisch Dämpferregelung, die elektronische Stabilitätskontrolle (ESP), der Tempomat, das Reifendruckkontrollsystem, Spurerkennungssystem, Nothaltesystem, Wankneigungskontrolle und weiter Systeme können mit der erfindungsgemäßen Prüfvorrichtung überprüft werden. Für die Überprüfung von intelligenten Fahrassistenzsystemen können Erweiterungen der Prüfvorrichtung vorgesehen werden. Insbesondere können dazu weitere Erfassungselemente vor dem Fahrzeug platziert werden. Diese Erfassungselemente können derart ausgestaltet sein, dass insbesondere Verkehrsschilder simuliert werden, sodass bspw. die Verkehrszeichenerkennung im Fahrzustand des Fahrzeugs geprüft werden kann. Zudem können die Erfassungselemente auch derart ausgestaltet sein, dass die Radarsensoren des Fahrzeugs angeregt bzw. aktiviert werden können um dadurch bspw. den Abstandstempomaten des Fahrzeugs zu überprüfen. Zudem können mit den Erfassungselementen bewegte Gegenstände wie Fußgänger simuliert werden um dadurch die automatisierten Bremsassistenten des Fahrzeugs zu überprüfen. Besonders vorteilhaft kann das Erfassungselement als multifunktionale Wand vor dem Fahrzeug aufgebaut werden wobei über visuelle Anzeigen und insbesondere einen Projektor welcher die Wand anstrahlt um ein Bild oder Bildfolge zu erzeugen, eine Fahrt simuliert werden kann. Die multifunktionale Wand kann zudem über Schiebelemente insbesondere metallische Schiebeelemente verfügen welche in den Erfassungsbereich der jeweiligen Sensoren des Fahrzeugs gebracht werden können um Objekte im Bereich der Fahrbahn zu simulieren. Damit können Fußgänger, Tiere oder sogar andere Fahrzeuge simuliert werden und sämtliche Sensoren und Assistenzsysteme welche zur Erfassung solcher Objekte vorgesehen sind im Fahrzustand des Fahrzeugs überprüft werden.

Nach einem weiteren Aspekt der Erfindung sind die Zwischenhubmittel (2A, 2B) als Radfreiheber einsetzbar und/oder umfassen Scherenhubelemente (5).

Nach einem weiteren Aspekt der Erfindung umfasst die Vorrichtung eine Fahrzeugschnittstelle, wobei Systemwerte der Fahrzeugsysteme und insbesondere die Beschleunigungs- und Geschwindigkeitswerte der Fahrzeugsensoren über diese Schnittstelle auslesbar sind und/oder über eine Anzeigeeinheit darstellbar und/oder mit vorbestimmten Sollwerten vergleichbar sind.

Nach einem weiteren Aspekt des Verfahrens der Erfindung ist die Laufrolle (6) mit einem Antrieb ausgestaltet und das Rad (7R) des Fahrzeugs (7) wird über die Laufrolle (6) angetrieben.

Nach einem weiteren Aspekt des Verfahrens der Erfindung ist die Aufstandsfläche (3A, 3B) und/oder Fahrfläche (8) oder eine Schiebeplatte derart horizontal verschieblich ausgestaltet, dass das auf der Aufstandsfläche (3A, 3B) positionierte Fahrzeug (7) in eine Querbewegung und/oder Rotationsbewegung versetzt werden kann, das Verfahren mit dem Schritt, Ansteuern der Aufstandsfläche (3A, 3B), der Fahrfläche (8) und/oder der Schiebeplatte zur Erzeugung einer Beschleunigung und/oder Geschwindigkeit des Fahrzeugs (7) derart, dass ein vorbestimmter Erfassungsbereich der Fahrzeugsensoren erreichbar ist wodurch Sensorsignale des Fahrzeugs (7) erzeugbar sind die zur Funktionsprüfung der Steuereinheit zugeführt werden.

## Patentansprüche

1. Prüfvorrichtung für eine Funktionsprüfung von Fahrzeugsystemen, mit
zumindest einer vertikal verfahrbaren Aufstandsfläche (3A, 3B) welche mit zumindest einem Hubmittel (1A, 1B, 2A, 2B) in Wirkverbindung steht, wobei das Fahrzeug (7) mit der Aufstandsfläche (3A, 3B) kontaktierbar ist,
einer mit einem Rad (7R) des Fahrzeugs (7) in Verbindung bringbaren, mitrotierbaren Laufrolle (6), und
einer Steuereinheit zur Ansteuerung des Hubmittels (1A, 1B, 2A, 2B), wobei das Hubmittel (1A, 1B, 2A, 2B) derart ansteuerbar ist, dass ein vorbestimmter Beschleunigungszustand und/oder Geschwindigkeitszustand des auf der Aufstandsfläche (3A, 3B) positionierten Fahrzeugs (7) erzeugbar ist und dadurch ein vorbestimmter Erfassungsbereich der Fahrzeugsensoren erreichbar ist, wobei die Fahrzeugsensoren Beschleunigungssensoren umfassen, wodurch Sensorsignale des Fahrzeugs (7) erzeugbar sind die zur Funktionsprüfung der Steuereinheit zugeführt werden,
wobei das Hubmittel ein Haupthubmittel (1A, 1B, 2A, 2B) umfasst welches mit vertikal verfahrbaren Fahrflächen (8) in Verbindung steht,
**dadurch gekennzeichnet, dass** auf den Fahrflächen (8) ein zusätzliches Zwischenhubmittel (2A, 2B) angeordnet ist welches mit der vertikal verfahrbaren Aufstandsfläche (3A, 3B) in Verbindung steht,
wobei die Prüfvorrichtung zumindest ein erstes Hubmittel (1A, 2A) welches mit einer ersten Aufstandsfläche (3A) in Wirkverbindung steht und ein zweites Hubmittel (1B, 2B) welches mit einer zweiten Aufstandsfläche (3B) in Wirkverbindung steht aufweist,
wobei die erste Aufstandsfläche (3A) gegenüberliegend der zweiten Aufstandsfläche (3B) angeordnet ist, und
wobei die Hubmittel (1A, 1B, 2A, 2B) unabhängig voneinander ansteuerbar sind.

2. Vorrichtung nach Anspruch 1, wobei das Drehmoment, die Drehzahl und/oder der Kontaktdruck des mit der Laufrolle (6) kontaktierten Rades (7R), über ein Erfassungsmittel erfassbar ist.

3. Vorrichtung nach zumindest einem der Ansprüche 1 oder 2, wobei die Laufrolle (6) einen Antrieb umfasst und/oder zumindest zwei Räder (7R) des Fahrzeugs (7) mit einer eigenen Laufrolle (6) kontaktierbar und antreibbar sind.

4. Vorrichtung nach Anspruch 1, wobei die Laufrollen (6) derart mit den Rädern (7R) des über die Zwischenhubmittel (2A,2B) freigehobenen Fahrzeugs (7) in Wirkverbindung stehen, dass ein Fahrzustand simulierbar ist und dadurch die Fahrzeugsysteme im Fahrzustand angeregt werden.

5. Vorrichtung nach zumindest einem der Ansprüche 1 bis 4, wobei die Aufstandsflächen (3A, 3B) asynchron oder gleichzeitig und gegenläufig über die Hubmittel (1A, 1B, 2A, 2B) anhebbar, absenkbar und/oder in der Ebene drehbar ausgestalltet sind.

6. Vorrichtung nach zumindest einem der Ansprüche 1 bis 5, wobei die Beschleunigung eine Querbeschleunigung, und/oder Längsbeschleunigung des Fahrzeugs (7) ist und die Geschwindigkeit eine Gierrate, Nickgeschwindigkeit, und/oder Wankgeschwindigkeit des Fahrzeugs (7) ist, wobei durch die zusätzliche Bewegung der Hubmittel (1A, 1B, 2A, 2B) und/oder durch das zusätzliche kontrollierbare Antreiben der Räder (7R), die Sicherheitssysteme des Fahrzeugs (7) ausgelöst werden können.

7. Vorrichtung nach zumindest einem der Ansprüche 1 bis 6, wobei jedes Hubmittel (1A, 1B, 2A, 2B) zumindest einen hydraulischen und/oder pneumatischen Hubzylinder (4A, 4B) umfasst und/oder wobei die Hubmittel (1A, 1B, 2A, 2B) derart über die Steuereinheit ansteuerbar sind, dass die Aufstandsflächen (3A, 3B) sich impulsartig bewegen.

8. Vorrichtung nach einem der Ansprüche 3 oder 4, wobei die angetriebene Laufrolle (6) schlupffrei zum Rad (7R) des Fahrzeugs (7) angetrieben wird und über eine Drehmomentenerfassung und/oder Geschwindigkeitserfassung und/oder Erfassung der Druckdifferenz der Laufrollen (6), ein Bremseingriff des Fahrassistenzsystems ermittelbar ist.

9. Vorrichtung nach zumindest einem der Ansprüche 1 bis 8, wobei auf der Aufstandsfläche (3A, 3B) eine antreibbare oder in zwei Achsrichtungen gleitend gelagerte Schiebeplatte vorgesehen ist, die sich in Längsrichtung und/oder Querrichtung und/oder in Kreisbahnen und/oder auf einer Bahn mit sich veränderndem Radius bewegt, oder
wobei die Aufstandsfläche (3A, 3B) und/oder Fahrfläche derart horizontal verschieblich ausgestaltet ist, dass das auf der Aufstandsfläche (3A, 3B) positionierte Fahrzeug (7) in eine Querbewegung und/oder Rotationsbewegung versetzt werden kann.

10. Verfahren zur Funktionsprüfung von Fahrzeugsystemen, an einem Prüfstand mit
zumindest einer vertikal verfahrbaren Aufstandsfläche (3) welche mit zumindest einem Hubmittel (1A, 1B, 2A, 2B) in Wirkverbindung steht,
einer mit einem Rad (7R) des Fahrzeugs (7) in Verbindung bringbaren, mitrotierbaren Laufrolle (6), und einer Steuereinheit zur Ansteuerung des Hubmittels (1A, 1B), wobei das Hubmittel ein Haupthubmittel (1A, 1B) umfasst welches mit vertikal verfahrbaren Fahrflächen (8) in Verbindung steht und wobei auf den Fahrflächen (8) ein zusätzliches Zwischenhubmittel (2A, 2B) angeordnet ist welches mit der vertikal verfahrbaren Aufstandsfläche (3A, 3B) in Verbindung steht, mit zumindest einem ersten Hubmittel (1A) und einem zweiten Hubmittel (1B), wobei die Hubmittel (1A, 1B) unabhängig voneinander ansteuerbar sind und die Hubmittel (1A, 1B) asynchron oder gleichzeitig und gegenläufig angesteuert werden, und wobei die Steuereinheit die folgenden Schritte veranlasst:
Anheben des Fahrzeugs (7) durch das Hubmittel (1A, 1B, 2A, 2B) und Kontaktierung der Laufrolle (6) mit einem Rad (7R) des Fahrzeugs zur Übertragung und/oder Erfassung eines Drehmoments und/oder einer Geschwindigkeit des Rades (7R),
Ansteuerung des Hubmittels (1A, 1B, 2A, 2B) zur Erzeugung einer Beschleunigung und/oder Geschwindigkeit des Fahrzeugs (7) derart, dass ein vorbestimmter Erfassungsbereich der Fahrzeugsensoren erreichbar ist wodurch Sensorsignale des Fahrzeugs (7) erzeugbar sind die zur Funktionsprüfung der Steuereinheit zugeführt werden, wobei die Fahrzeugsensoren Beschleunigungssensoren umfassen.

11. Verfahren nach Anspruch 10, wobei die Ansteuerung des Hubmittels (1A, 1B) ein impulsartiges Anheben, Absenken und/oder Drehen der Aufstandsflächen (3A, 3B) bewirkt.

12. Verfahren nach zumindest einem der Ansprüche 10 bis 11, wobei das Hubmittel ein Haupthubmittel (1A, 1B) umfasst welches mit vertikal verfahrbaren Fahrflächen (8) in Verbindung steht und wobei auf den Fahrflächen (8) ein zusätzliches Zwischenhubmittel (2A, 2B) angeordnet ist welches mit der vertikal verfahrbaren Aufstandsfläche (3A, 3B) in Verbindung steht mit dem Schritt,
Ansteuern des Haupthubmittels (1A, 1B) derart, dass ein impulsartiges Anheben, Absenken und/oder Drehen der Aufstandsflächen (3A, 3B) bewirkt wird.

## Claims

1. A test device for functional testing of vehicle systems, comprising:
at least one vertically displaceable contact surface (3A, 3B) which is in operative connection with at least one lifting means (1A, 1B, 2A, 2B), wherein the vehicle (7) is contactable with said contact surface (3A, 3B),
a rotatable roller (6) which can be brought into connection with a wheel (7R) of said vehicle (7), and
a control unit for controlling said lifting means (1A, 1B, 2A, 2B),
wherein said lifting means (1A, 1B) is controllable in such a way that a predetermined acceleration state and/or speed state of said vehicle (7) positioned on said contact surface (3A, 3B) can be generated, whereby a predetermined detection range of the vehicle sensors can be reached, whereby sensor signals of said vehicle (7) can be generated which are supplied to said control unit for functional testing,
wherein said lifting means comprises a main lifting means (1A, 1B, 2A, 2B) which is in connection with vertically displaceable driving surfaces (8)
**characterized in that**, on said driving surfaces (8), an additional intermediate lifting means (2A, 2B) is arranged which is in connection with said vertically displaceable contact surface (3A, 3B)
wherein said test device comprises at least one first lifting means (1A, 2A) which is in operative connection with a first contact surface (3A) and one second lifting means (1B, 2B) which is in operative connection with a second contact surface (3B),
wherein said first contact surface (3A) is disposed opposite said second contact surface (3B), and
wherein said lifting means (1A, 1B, 2A, 2B) are independently controllable.

2. The device according to claim 1, wherein the torque, rotational speed and/or contact pressure of said wheel (7) contacted with said roller (6) can be detected by a detection means.

3. The device according to claim 1 or 2, wherein said roller (6) comprises a drive and/or at least two wheels (7R) of said vehicle (7) can be contacted and driven by a separate roller (6).

4. The device according to claim 1, wherein said rollers (6) are in operative connection with said wheels (7R) of said vehicle (7) freed via said intermediate lifting means (2A, 2B), such that a driving condition can be simulated, whereby the vehicle systems are engaged in the driving condition.

5. The device according to at least one of claims 1 to 4, wherein said contact surfaces (3A, 3B) can be raised, lowered and/or rotated in the plane via said lifting means (1A, 1B, 2A, 2B) asynchronously or simultaneously and in opposite directions.

6. The device according to at least one of claims 1 to 5, wherein the acceleration is a transversal acceleration, and/or longitudinal acceleration of said vehicle (7) and the speed is a yaw rate, pitch rate and/or roll rate of said vehicle (7), wherein the safety systems of said vehicle (7) can be triggered by the additional movement of said lifting means (1A, 1B, 2A, 2B) and/or by the additional controllable driving of said wheels (7R),.

7. The device according to at least one of claims 1 to 6, wherein each lifting means (1A, 1B, 2A, 2B) comprises at least one hydraulic and/or pneumatic lifting cylinder (4A, 4B) and/or wherein said lifting means (1A, 1B, 2A, 2B) can be controlled via said control unit such that said contact surfaces (3A, 3B) move in a pulse-like manner.

8. The device according to one of claims 3 or 4, wherein the driven roller (6) is driven slip-free with respect to said wheel (7R) of said vehicle (7) and a braking intervention of the driver assistance system can be determined via a torque detection and/or a speed detection and/or a detection of the pressure difference of said rollers (6).

9. The device according to at least one of claims 1 to 8, wherein a sliding plate, which is drivable or slidably mounted in two axial directions and moves in the longitudinal and/or transverse direction and/or in circular trajectories and/or on a trajectory with changing radius, is provided on said contact surface (3A, 3B), or
wherein said contact surface (3A, 3B) and/or driving surface is configured to be horizontally displaceable such that said vehicle (7) positioned on said contact surface (3A, 3B) can be put into a transverse motion and/or rotational motion.

10. A method for functional testing of vehicle systems on a test bench comprising
at least one vertically displaceable contact surface (3) which is in operative connection with at least one lifting means (1A, 1B, 2A, 2B),
a rotatable roller (6) which can be brought into connection with a wheel (7R) of said vehicle (7), and a control unit for controlling said lifting means (1A, 1B), wherein said lifting means comprises a main lifting means (1A, 1B) which is in connection with vertically displaceable driving surfaces (8), and wherein, on said driving surfaces (8), an additional intermediate lifting means (2A, 2B) is arranged which is in connection with said vertically displaceable contact surface (3A, 3B),
further comprising at least one first lifting means (1A, 2A) and one second lifting means (1B, 2B), wherein said lifting means (1A, 1B, 2A, 2B) are independently controllable and said lifting means (1A, 1B, 2A, 2B) are driven asynchronously or simultaneously and in opposite directions,
wherein said control unit initiates the following steps:
lifting said vehicle (7) by said lifting means (1A, 1B, 2A, 2B) and contacting said roller (6) with a wheel (7R) of said vehicle for transmitting and/or detecting a torque and/or a speed of said wheel (7R),
controlling said lifting means (1A, 1B, 2A, 2B) to generate an acceleration and/or speed of said vehicle (7) such that a predetermined detection range of the vehicle sensors can be reached, whereby sensor signals of said vehicle (7) can be generated which are supplied to said control unit for functional testing, wherein said vehicle sensors comprise acceleration sensors.

11. The method according to claim 10, wherein the control of said lifting means (1A, 1B) causes a pulse-like raising, lowering and/or rotating of said contact surfaces (3A, 3B).

12. The method according to at least one of claims 10 to 11, wherein said lifting means comprises a main lifting means (1A, 1B) which is in connection with vertically displaceable driving surfaces (8), and wherein, on said driving surfaces (8), an additional intermediate lifting means (2A, 2B) is arranged which is in connection with said vertically displaceable contact surface (3A, 3B), said method comprising the step of
controlling said main lifting means (1A, 1B) in such a way that a pulse-like raising, lowering and/or rotating of said contact surfaces (3A, 3B) is caused.

## Revendications

1. Dispositif de contrôle pour un contrôle de fonctionnement de systèmes de véhicule, comportant au moins une surface d'appui (3A, 3B) mobile verticalement, qui est en liaison d'action avec au moins un moyen de levage (1A, 1B, 2A, 2B), le véhicule (7) pouvant être mis en contact avec la surface d'appui (3A, 3B),
une roulette (6) qui peut être mise en liaison avec une roue (7R) du véhicule (7) en pouvant tourner avec celle-ci, et
une unité de commande pour piloter le moyen de levage (1A, 1B, 2A, 2B), le moyen de levage (1A, 1B, 2A, 2B) pouvant être piloté de telle sorte qu'il est possible de générer un état d'accélération prédéterminée et/ou un état de vitesse prédéterminé du véhicule (7) positionné sur la surface d'appui (3A, 3B) et d'atteindre ainsi une zone de détection prédéterminée des capteurs du véhicule,
dans lequel
les capteurs du véhicule comprennent des capteurs d'accélération, de sorte que des signaux des capteurs du véhicule (7) peuvent être générés qui sont amenés à l'unité de commande pour le contrôle de fonctionnement,
le moyen de levage comprend un moyen de levage principal (1A, 1B, 2A, 2B) qui est en liaison avec des surfaces de roulement (8) mobiles verticalement,
**caractérisé en ce qu'**un moyen de levage intermédiaire (2A, 2B) supplémentaire est disposé sur les surfaces de roulement (8), qui est en liaison avec la surface d'appui (3A, 3B) mobile verticalement,
dans lequel le dispositif de contrôle comporte au moins un premier moyen de levage (1A, 2A) qui est en liaison d'action avec une première surface d'appui (3A), et un second moyen de levage (1B, 2B) qui est en liaison d'action avec une seconde surface d'appui (3B),
dans lequel la première surface d'appui (3A) est agencée en face de la seconde surface d'appui (3B), et
dans lequel les moyens de levage (1A, 1B, 2A, 2B) peuvent être pilotés indépendamment l'un de l'autre.

2. Dispositif selon la revendication 1, dans lequel le couple de rotation, la vitesse de rotation et/ou la pression de contact de la roue (7R) mise en contact avec la roulette (6) sont détectables par un moyen de détection.

3. Dispositif selon l'une au moins des revendications 1 ou 2, dans lequel la roulette (6) comprend un entraînement, et/ou au moins deux roues (7R) du véhicule (7) sont susceptibles d'être mises en contact et d'être entraînées par une propre roulette (6).

4. Dispositif selon la revendication 1, dans lequel les roulettes (6) sont en liaison d'action avec les roues (7R) du véhicule (7) soulevé par les moyens de levage intermédiaires (2A, 2B), de telle sorte qu'il est possible de simuler un état de conduite et que les systèmes du véhicule sont ainsi excités dans l'état de conduite.

5. Dispositif selon l'une au moins des revendications 1 à 4, dans lequel les surfaces d'appui (3A, 3B) sont réalisées de manière à pouvoir être soulevées, abaissées et/ou tournées dans le plan de façon asynchrone ou simultanément et en sens opposés par les moyens de levage (1A, 1B, 2A, 2B).

6. Dispositif selon l'une au moins des revendications 1 à 5, dans lequel l'accélération est une accélération transversale et/ou une accélération longitudinale du véhicule (7), et la vitesse est un taux de lacet, une vitesse de tangage et/ou une vitesse de roulis du véhicule (7), le mouvement supplémentaire des moyens de levage (1A, 1B, 2A, 2B) et/ou l'entraînement contrôlable supplémentaire des roues (7R) permettant de déclencher les systèmes de sécurité du véhicule (7).

7. Dispositif selon l'une au moins des revendications 1 à 6, dans lequel chaque moyen de levage (1A, 1B, 2A, 2B) comprend au moins un vérin de levage hydraulique et/ou pneumatique (4A, 4B), et/ou les moyens de levage (1A, 1B, 2A, 2B) sont pilotables par l'unité de commande de telle sorte que les surfaces d'appui (3A, 3B) se déplacent par impulsions.

8. Dispositif selon l'une des revendications 3 ou 4, dans lequel la roulette entraînée (6) est entraînée sans patinage par rapport à la roue (7R) du véhicule (7), et une intervention de freinage du système d'assistance à la conduite est détectable par une détection du couple de rotation et/ou par une détection de la vitesse et/ou par une détection de la différence de pression des roulettes (6).

9. Dispositif selon l'une au moins des revendications 1 à 8, dans lequel un plateau coulissant susceptible d'être entraîné ou monté en coulissement dans deux directions d'axe est prévu sur la surface d'appui (3A, 3B), ledit plateau se déplaçant en direction longitudinale et/ou en direction transversale et/ou sur des trajectoires circulaires et/ou sur une voie ayant un rayon variable, ou
la surface d'appui (3A, 3B) et/ou la surface de roulement sont réalisées mobiles horizontalement de telle sorte que le véhicule (7) positionné sur la surface d'appui (3A, 3B) peut être mis en mouvement transversal et/ou en mouvement de rotation.

10. Procédé de contrôle de fonctionnement de systèmes de véhicule sur un banc d'essai, comportant
au moins une surface d'appui (3A, 3B) mobile verticalement qui est en liaison d'action avec au moins un moyen de levage (1A, 1B, 2A, 2B),
une roulette (6) qui peut être mise en contact avec une roue (7R) du véhicule (7) en pouvant tourner avec celle-ci, et
une unité de commande pour piloter le moyen de levage (1A, 1B), le moyen de levage comprenant un moyen de levage principal (1A, 1B) qui est en liaison avec des surfaces de roulement (8) mobiles verticalement, et un moyen de levage intermédiaire (2A, 2B) supplémentaire étant disposé sur les surfaces de roulement (8), qui est en liaison avec la surface d'appui (3A, 3B) mobile verticalement, comprenant au moins un premier moyen de levage (1A) et un second moyen de levage (1B), les moyens de levage (1A, 1B) pouvant être pilotés indépendamment l'un de l'autre et les moyens de levage (1A, 1B) étant pilotés de façon asynchrone ou simultanément et en sens opposés, et
l'unité de commande provoque les étapes suivantes consistant à :
soulever le véhicule (7) par le moyen de levage (1A, 1B, 2A, 2B) et
mettre en contact la roulette (6) avec une roue (7R) du véhicule pour transmettre et/ou détecter un couple de rotation et/ou une vitesse de la roue (7R),
piloter le moyen de levage (1A, 1B, 2A, 2B) pour générer une accélération et/ou une vitesse du véhicule (7) de telle sorte qu'il est possible d'atteindre une zone de détection prédéterminée des capteurs du véhicule, de sorte que des signaux des capteurs du véhicule (7) peuvent être générés qui sont amenés à l'unité de commande pour le contrôle de fonctionnement, les capteurs du véhicule comprenant des capteurs d'accélération.

11. Procédé selon la revendication 10, dans lequel le pilotage du moyen de levage (1A, 1B) provoque un soulèvement, un abaissement et/ou une rotation par impulsions des surfaces d'appui (3A, 3B).

12. Procédé selon l'une au moins des revendications 10 à 11, dans lequel le moyen de levage comprend un moyen de levage principal (1A, 1B) qui est en liaison avec des surfaces de roulement (8) mobiles verticalement, et un moyen de levage intermédiaire (2A, 2B) supplémentaire est disposé sur les surfaces de roulement (8), qui est en liaison avec la surface d'appui (3A, 3B) mobile verticalement, comprenant l'étape consistant à
piloter le moyen de levage principal (1A, 1B) de telle sorte qu'il s'effectue un soulèvement, un abaissement et/ou une rotation par impulsions des surfaces d'appui (3A, 3B).
